# EUROPEAN PATENT APPLICATION

(11) **EP 0 623 935 A1**
(43) Date of publication of application: **09.11.1994**
(21) Application number: 93107129.4
(22) Date of filing: 03.05.1993
(51) Int. Cl.: H01B 1/24, C08K 3/04, F23Q 2/28

(54) **Conductive composition**

(71) Applicant: DU PONT DE NEMOURS INTERNATIONAL S.A., CH-1218 Le Grand-Saconnex (Genève) (CH)
(72) Inventor: Koppen, Johannes Evert Aloisius, NL-3354 BJ Papendrecht (NL)

(57) **Abstract**

A conductive composition containing polyoxymethylene (POM) homopolymer and conductive carbon fibers is disclosed. Such compositions are suitable for use in combination with piezo electric materials which can be put to various end-uses, among these in making triggers for portable cigarette lighters.

## Description

The invention of this application is directed to conductive compositions, more specifically to polyoxymethylene (POM) homopolymer compositions containing conductive carbon fibers. Such compositions are suitable for use in combination with piezoelectric materials which can be put to various end-uses, among these, in making triggers for portable cigarette lighters.

Ignition or spark is created in many portable lighters today through friction. There are now also lighters available in which ignition is created through pressure applied to a piezoelectric material. One type of such lighters is commercially available from BIC Corporation under the name "BIC Electronic". The composition of this invention is particularly suitable for preparing triggers for such lighters.

### Background of the Invention

POM homopolymers are known to be excellent insulating materials. Attempts have been made to produce a conductive composition containing these homopolymers, but so far such compositions have had various drawbacks including instability, undesirable processing properties and insufficient conductivity.

It is an object of this invention to produce conductive POM homopolymer compositions which avoid the drawbacks of the heretofore known compositions. More specifically, it is an object of this invention to provide a POM homopolymer composition possessing good conductivity while simultaneously being sufficiently stable and having good mechanical properties for moulding, extruding and other processing techniques and whose properties meet the requirements of the particular end-use.

The invention of this application is particularly directed to a conductive POM homopolymer composition comprising a POM homopolymer and 15-20% by weight of conductive carbon fibers, weight percents given herein being based on the overall weight of the composition.

The composition preferably will contain further components common to POM compositions, including heat stabilizing agents, lubricating agents, coloring agents and anti-oxidants
As used herein, the terms have the following meanings.

Polyoxyethylene (POM) homopolymers refers to a known class of compounds including homopolymers of formaldehyde, the terminal groups of which are end-capped by esterification. The POM homopolymer is linear and preferably has a number average molecular weight in the range of 10,000 to 80,000, more preferably from 35,000 to 45,000 The molecular weight of the POM can be conveniently measured by gel permeation chromatography in hexafluorisopropanol at about 30 ^{o}C using a Du Pont PSM bimodal column kit with nominal pore size of 60 and 1000 A.

If the molecular weight of the POM homopolymer is either too high or too low, it is difficult to work with and to disperse within it the carbon fibers and additives, as will be understood by the skilled artisan. Especially suitable POMs are sold under the name DELRIN (trademark of DuPont) and related technical information can be found in brochure No. E-96324 entitled "DELRIN Product Guide and Properties" available from DuPont.

Suitable conductive carbon fibers are sold under the name TENAX HTA 5U41, available from the Enka division of Akzo Fibers, which have a cut length of 6 mm and a filament diameter of 7 microns.

The conductive carbon fibers are present in the composition of this invention in an amount ranging from 15-20 % by weight, more preferably 17-19 %. At levels higher than 20%, it becomes difficult to disperse the carbon properly in the composition. At levels under 15%, the conductivity of the composition can be insufficient, particularly when the composition is recycled. For example, during the process of moulding or extruding the composition into a desired shape, fragments of the composition remain which can either be discarded or reused. If they are reused, the fragments are normally ground into smaller pieces prior to their remoulding or reextruding. Grinding of the pieces tends to lower their conductivity. In cases where the amount of carbon is under 15 weight %, the conductivity of the composition after grinding may become unacceptably low.

Heat stabilizing agents, as their name implies, serve to stabilize the compositions of this invention at elevated temperatures, e.g. moulding temperatures, extruding temperatures and the like. Preferred such agents are polyacrylamides and ethylene vinyl alcohol (EVOH). A preferred polyacrylamide will have a small particle size and be non-melting, such as MAP 1000 and MAP 1070, available from DuPont, and is preferably present in the composition of this invention in a weight range of 0.25 to 0.50 % by weight, more preferably 0.35 to 0.40 % by weight.

Lubricating agents serve to improve the workability, e.g. mouldability and extrudability of the compositions of this invention. Preferred lubricating agents are polytetrafluoro-ethylene (PTFE), (e.g. FLUON type L 169 available from ICI), ethylene stearamide (e.g. ACRAWAX available from Lonza Benelux B.V., Breda, Holland) and polyethylene glycol (PEG). A particularly preferred lubricating agent is PTFE, which is preferably present in the composition of this invention in a weight range of 3 to 12% by weight, more preferably 4 to 5%. At levels above 10%, care must be taken as it has been found that the composition may begin to leave deposits during moulding.

Stearate compounds such as calcium stearate and zinc stearate are preferably not used as lubricants in the compositions of this invention, as they have been found to degrade the POM component
Suitable coloring agents include carbon black, which may be present in a low density polyethylene matrix. The coloring agent is preferably present in the composition in an amount ranging from 0.5 to 1.0% by weight.

Anti-oxidants serve to prevent oxidative degradation in polymers. Suitable anti-oxidants are sterically hindered phenols and include IRGANOX 1010 and IRGANOX 245 (available from Ciba-Geigy). The anti-oxidant is preferably present in the composition in an amount ranging from 0.05 to 0.20 % by weight.

Compositions according to the instant invention have been found to have conductivities on the order of 1-10 ohms.cm as measured by Volume Resistivity testing according to ASTM D257.

Compositions according to this invention are conveniently prepared according to known compounding techniques. One such suitable technique is as follows.

### Examples

A two step procedure is followed whereby a masterbatch of POM/PTFE is made in a twin screw extruder using the following ingredients:

| | % by weight |
|---|---|
| PTFE | 20.0 |
| carbon black in LDPE ¹ | 3.0 |
| IRGANOX 1010 ² | 0.5 |
| DELRIN NC-010 ³ | 76.5 |

| | |
|---|---|
| ¹ black colorant in a low density polyethylene matrix | |
| ² anti-oxidant available from Ciba-Geigy | |
| ³ a medium viscosity natural colored POM, having a melt flow index of about 14.0 g/10 min. and heat-stabilized with polyacrylamide available from DuPont. | |

In the second step the masterbatch is compounded into a mixture as described below, using a single screw extrusion process.

| | % by weight |
|---|---|
| Masterbatch | 25.0 |
| conductive carbon fiber | 18.0 |
| DELRIN NC-010 | 57.0 |

| The final composition is | |
|---|---|
| PTFE | 5.0 |
| carbon black in LDPE | 0.75 |
| IRGANOX 1010 | 0.125 |
| Conductive carbon fiber | 18.0 |
| DELRIN NC-010 | 76.125 |

The composition of this invention can be formed into desired shapes by processing the compositions by standard techniques, e.g. extruding or moulding. These techniques are known in the art and are therefore not described in detail.

The conductive POM parts so formed may then be used in various applications, including, as mentioned before, as triggers in piezoelectric-type cigarette lighters.

## Claims

1. A conductive polyoxymethylene homopolymer composition comprising a polyoxymethylene homopolymer and conductive carbon fibers.

2. A composition according to claim 1 wherein the conductive carbon fibers are present in an amount ranging from about 15-20% by weight.

3. A composition according to claim1 or 2 further comprising a heat stabilizing agent.

4. A composition according to any one of claims 1 to 3 further comprising a lubricant.

5. A composition according to any one of claims 1 to 4 substantially free from stearate compounds.

6. A conductive polyoxymethylene homopolymer composition comprising a polyoxymethylene homopolymer, conductive carbon fibers, a polyacrylamide and polytetrafluoroethylene.

7. Use of the composition as defined in any one of claims 1 to 6 in a piezoelectric device.

8. A lighter having an ignition device comprising the conductive composition of any one of claims 1 to 6.
